# EUROPÄISCHE PATENTSCHRIFT

(11) **EP 0 781 386 B1**
(45) Veröffentlichungstag und Bekanntmachung des Hinweises auf die Patenterteilung: **18.11.1998**
(21) Anmeldenummer: 94927604.2
(22) Anmeldetag: 12.09.1994
(51) Int. Cl.: F16L 19/02, F16L 33/00

(54) **ANSCHLUSSSTÜCK FÜR DIE ROHRLEITUNGSKUPPLUNG EINES HOCHDRUCKREINIGUNGSGERÄTS**
CONNECTOR PIECE FOR THE HOSE COUPLING OF HIGH-PRESSURE CLEANING EQUIPMENT
RACCORD POUR LA PIECE D'ACCOUPLEMENT DES TUYAUX D'UN APPAREIL DE NETTOYAGE A HAUTE PRESSION

(43) Veröffentlichungstag der Anmeldung: 02.07.1997
(73) Patentinhaber: Alfred Kärcher GmbH & Co., 71364 Winnenden (DE)
(72) Erfinder: Körner, Helmut, 71522 Backnang (DE); Gassert, Helmut, 71573 Allmersbach (DE); Klein, Peter, 71364 Winnenden (DE); Schick, Roland, 71549 Auenwald (DE); Veit, Eberhard, 73035 Göppingen (DE)
(74) Vertreter: Hoeger, Stellrecht & Partner
(86) Internationale Anmeldenummer: EP9403043
(87) Internationale Veröffentlichungsnummer: WO9608669

(56) Entgegenhaltungen:
- CH-A- 681 558
- DE-A- 2 926 215
- DE-A- 4 218 347
- FR-A- 1 000 956

## Beschreibung

Die Erfindung betrifft ein mit einem Überwurfring versehenes Anschlußstück für die Rohrleitungskupplung eines Hochdruckreinigungsgeräts, welche Rohrleitungskupplung eine Kupplungshülse mit einer konischen Dichtfläche, einer daran anschließenden kreiszylindrischen Dichtfläche sowie ein Außengewinde für den Überwurfring des Anschlußstücks umfaßt, mit einem eine Ringdichtung tragenden, zylindrischen, abdichtbar an die kreiszylindrische Dichtfläche der Kupplungshülse anlegbaren Nippel und einer konvexen Dichtschulter zur dichtenden Anlage an der konischen Dichtfläche der Kupplungshülse, wobei der Überwurfring auf dem Anschlußstück frei drehbar und in axialer Richtung im wesentlichen unverschiebbar gelagert ist.

Derartige Anschlußstücke haben sich bei Rohrleitungsverbindungen von Hochdruckreinigungsgeräten bewährt, insbesondere zum Anschließen eines Hochdruckschlauchs an die Kupplungshülse eines Hochdruckreinigungsgeräts.

Ein solches Anschlußstück ist beispielsweise bekannt aus der DE 42 18 347 A1.

Derartige Anschlußstücke sind bei Hochdruckreinigungsgeräten höchsten Beanspruchungen ausgesetzt, und zwar sowohl in mechanischer als auch in chemischer Hinsicht. Diese Anschlußstücke werden von den Bedienungspersonen oft ohne jede Sorgfalt gehandhabt, so daß Beschädigungen der empfindlichen Dichtflächen und insbesondere der Ringdichtungen häufig auftreten.

Es hat sich zudem als nachteilig herausgestellt, daß die Dichtungsverbindungen im Anschlußstück durch Kalkablagerungen und dergleichen so fest verbacken können, daß ein Lösen der Verbindung von Hand nicht mehr möglich ist. Beim Lösen derartiger Verbindungen mit hoher Gewaltaufwendung besteht ebenfalls die Gefahr einer mechanischen Beschädigung der Dichtflächen, so daß dadurch die Dichtwirkung insgesamt beeinträchtigt werden kann.

Es ist Aufgabe der Erfindung, ein Anschlußstück der gattungsgemäßen Art so auszubilden, daß Beschädigungen des Anschlußstücks durch unachtsamen Umgang mit dem Anschlußstück einerseits oder durch gewaltsames Lösen verbackener Verbindungen andererseits vermieden werden können.

Diese Aufgabe wird bei einem Anschlußstück der eingangs beschriebenen Art erfindungsgemäß dadurch gelöst, daß der Überwurfring in axialer Richtung über das freie Ende des Nippels übersteht und daß das Verhältnis der Länge des Nippels zu dessen Außendurchmesser zwischen 0.4 und 0.3 liegt.

Es hat sich überraschenderweise herausgestellt, daß diese Maßnahmen die gestellte Aufgabe in einfachster Weise lösen. Bei herkömmlichen Anschlußstücken waren die Nippel so lang ausgebildet, daß sie aus dem Überwurfring hervorstehen. Das erleichtert zwar das Einführen des Nippels in das Anschlußstück, andererseits besteht aber dadurch die Gefahr, daß die überstehenden Nippelbereiche bei unachtsamem Hantieren mit dem Anschlußstück an anderen Gegenständen anschlagen und dadurch beschädigt werden.

Im Rahmen der vorliegenden Erfindung wird daher der Überwurfring über den Nippel vorstehend ausgebildet, so daß der Nippel insgesamt im Inneren des Überwurfrings wie in einem Käfig gegen mechanische Beschädigungen geschützt wird.

Gleichzeitig wird die Länge des Nippels gegenüber herkömmlichen Anschlußstücken ganz erheblich reduziert. Bei herkömmlichen Anschlußstücken sind Nippel verwendet worden, deren Länge deutlich über dem halben Durchmesser des Nippels lag, in vielen Fällen wurden Längen verwendet, die etwa dem Durchmesser des Nippels entsprachen. Man ist dabei von dem Gedanken ausgegangen, daß die Außenfläche des Nippels als Dichtfläche wirkt und daher möglichst lang sein sollte, um eine gute Dichtung zu erreichen.

Im Rahmen der vorliegenden Erfindung wird von diesem Gedanken Abstand genommen. Im Gegensatz zur herkömmlichen Technik wird der Nippel so kurz ausgestaltet, daß die Anlageflächen zwischen Nippel und der zylindrischen Dichtfläche auf ein Minimum reduziert werden. Überraschenderweise wird dadurch die Dichtwirkung nicht beeinträchtigt, diese wird im wesentlichen von der Ringdichtung weiterhin zuverlässig übernommen. Die Reduzierung der Überlappung der zylindrischen Dichtfläche mit der zylindrischen Außenfläche des Nippels führt aber dazu, daß für Ablagerungen nur eine sehr geringe Fläche zur Verfügung steht, und nur in diesem Bereich können Verbackungen auftreten. Diese Fläche ist so gering, daß eine Bedienungsperson diese Verbackungen ohne große Mühe und ohne Werkzeug lösen kann, so daß dadurch auch Beschädigungen in diesem Bereich mit Sicherheit vermieden werden können.

Ein ganz besonderer Vorteil dieser Ausgestaltung liegt auch darin, daß die Gefahr einer Beschädigung beim Zusammenstecken der Rohrleitungskupplung deutlich reduziert ist. Bei bekannten Rohrleitungskupplungen erfolgt der erste Kontakt im Bereich des vorstehenden Nippels, und hier kann bei Fehljustierungen leicht eine Beschädigung der Nippelfläche und auch der Ringdichtung auftreten.

Bei der vorliegenden Konstruktion ergibt sich ein erster Kontakt der beiden Teile der Rohrleitungskupplung im Bereich des überstehenden Überwurfrings, dieser führt dann beim weiteren Zusammenschieben der Kupplungsteile den Nippel in die Kupplungshülse ein, wobei keinerlei Gefahr einer Fehljustierung und damit einer Beschädigung mehr besteht. Durch das Aufschrauben des Überwurfrings auf das Außengewinde der Kupplungshülse wird im Gegenteil der Nippel genau in Ausrichtung mit der zylindrischen Dichtfläche der Kupplungshülse in diese eingeführt, und dabei bewegt sich der Nippel genau auf der Längsachse der zylindrischen Dichtfläche der Kupplungshülse in diese hinein, Fehljustierungen können also nicht auftreten.

Durch diese Merkmalskombination ergibt sich somit ein Anschlußstück, dessen empfindliche Dichtungsteile erheblich besser gegen jede Art von Beschädigung geschützt sind als bei bekannten Anschlußstücken, wobei außerdem noch das Zusammensetzen dadurch erleichtert wird, daß der Benutzer nicht den Nippel in die Kupplungshülse einführen muß, sondern daß es genügt, den Überwurfring auf die Kupplungshülse aufzusetzen und dann auf diese aufzuschrauben, die Herstellung der Dichtung erfolgt dann zwangsläufig und in zuverlässiger Weise.

Es hat sich überraschenderweise herausgestellt, daß die Verkürzung der Nippelfläche auf die Dichteigenschaften keinerlei nachteilige Einwirkung hat, im Gegenteil läßt sich eine wesentlich bessere und dauerhaftere Dichtung erzielen, da Beschädigungen des Nippels mit Sicherheit vermieden werden können.

Bei einer vorteilhaften Ausgestaltung der Erfindung kann vorgesehen sein, daß die axiale Erstreckung der zylindrischen Fläche des Nippels zwischen der konvexen Dichtschulter und einer die Ringdichtung aufnehmenden Ringnut zwischen 0,2 und 0,1 des Außendurchmessers des Nippels beträgt. Diese Fläche wird also bewußt kurz gewählt, um dadurch die Auswirkungen von Verbackungen zu minimieren.

Weiterhin kann vorgesehen sein, daß die axiale Erstreckung der zylindrischen Fläche des Nippels zwischen einer die Ringdichtung aufnehmenden Ringnut und dem freien Ende des Nippels zwischen 0.1 und 0.05 des Außendurchmessers des Nippels beträgt, also auch in diesem Bereich wird der Nippel in axialer Richtung so kurz wie möglich ausgebildet, ausreichend nur, um die Ringnut in axialer Richtung abzuschließen.

Es ist günstig, wenn der Überwurfring mindestens um 2,5 mm über das freie Ende des Nippels vorsteht, dadurch ergibt sich ein zuverlässiger Schutz des Nippels auch beim unachtsamen Hantieren des Anschlußstücks, beispielsweise beim Herumwerfen eines Hochdruckschlauchs auf einem steinigen Untergrund.

Die Montage der beschriebenen Rohrleitungskupplung läßt sich dadurch erleichtern, daß der Überwurfring ein an seinem freien Rand beginnendes Innengewinde trägt und daß das Außengewinde der Kupplungshülse an eine zylindrische Führungsfläche am freien Ende der Kupplungshülse anschließt. Das Außengewinde der Kupplungshülse ist also gegenüber deren freiem Rand zurückgesetzt. Beim Zusammenfügen der beiden Teile der Rohrleitungskupplung kann der Benutzer daher zunächst das freie Ende des Überwurfrings an diese zylindrische Führungsfläche heranführen und dann den Überwurfring über eine bestimmte axiale Länge auf die Kupplungshülse aufschieben, ohne daß in diesem Teil bereits eine Schraubbewegung notwendig wäre. Dies erleichtert die gegenseitige Justierung der beiden Teile der Rohrleitungskupplung, wobei der Nippel erst dann in die Kupplungshülse eintritt, wenn der Eingriff des Überwurfrings und der zylindrischen Führungsfläche diese schon zuverlässig relativ zueinander führt. Eine Fehljustierung der beiden Teile wird dadurch ausgeschlossen, eventuelle Fehljustierungen beim Zusammenfügen der Teile werden von dem Überwurfring und der zylindrischen Führungsfläche der Kupplungshülse aufgenommen. Selbst wenn diese dabei beschädigt werden sollten, hat dies keinerlei Einfluß auf die empfindlichen Dichtungsflächen, diese bleiben bei der gesammten Herstellung einer Rohrleitungsverbindung geschützt.

Es hat sich als vorteilhaft erwiesen, wenn gemäß einer bevorzugten Ausführungsform die konvexe Dichtschulter in einen zylindrischen Anschlag übergeht, an dem der Überwurfring anliegt, und wenn das Verhältnis der axialen Erstreckung dieses zylindrischen Anschlags zu seinem Außendurchmesser zwischen 2 und 0.5 liegt. Dieser zylindrische Anschlag wird also relativ lang ausgebildet, so daß auch der Überwurfring eine entsprechende Länge erhält. Dies erleichtert die Handhabung des Überwurfrings, der im übrigen zusätzlich noch eine verlängerte Griff-Fläche erhalten kann, beispielsweise durch Verwendung einer sehr dicken Stirnwand des Überwurfrings.

Bei einer weiteren bevorzugten Ausführungsform ist vorgesehen, daß der Nippel in seinem zwischen einer die Ringdichtung aufnehmenden Nut und seinem freien Ende liegenden Abschnitt über einen Umfangsbereich eine die Nut bis zu ihrem Boden freigebende Durchbrechung aufweist, vorzugsweise wird diese Nut durch eine den Boden der Nut tangierende Sehne des kreisförmigen Querschnitts begrenzt. Eine solche Durchbrechung ermöglicht es, von der Stirnseite her unter die Ringdichtung zu greifen und diese zum Zweck des Auswechselns aus der Nut auszuheben. Konstruktionsbedingt befindet sich diese Nut immer im Inneren des Überwurfrings, und das seitliche Ausheben der Ringdichtung aus der Nut würde sich dabei wegen des umgebenden Überwurfrings anders als bei bekannten Konstruktionen schwierig gestalten, bei bekannten Konstruktionen befindet sich die Ringdichtung üblicherweise außerhalb des Überwurfrings, so daß dieser vom Umfang her ohne weiteres zugänglich ist. Das Vorsehen einer Durchbrechung in der Strinseite des Nippels ermöglicht einen axialen Zugang zu der Nut und erleichtert dadurch das Auswechseln der Ringdichtung.

Die nachfolgende Beschreibung einer bevorzugten Ausführungsform der Erfindung dient im Zusammenhang mit der Zeichnung der näheren Erläuterung. Es zeigen:
- Figur 1:: eine Längsschnittansicht einer Rohrleitungskupplung mit einer Kupplungshülse und einem Anschlußstück im zusammengesetzten Zustand und
- Figur 2:: eine Ansicht des Schlauchnippels des Anschlußstücks von der Stirnseite her.

Die in der Zeichnung dargestellte Rohrleitungskupplung umfaßt eine Kupplungshülse 1 und ein Anschlußstück 2. Die Kupplungshülse 1, die beispielsweise am Hochdruckausgang eines Hochdruckreinigungsgeräts angeordnet sein kann, umfaßt eine zylindrische Innenbohrung 3, deren Innenwand eine zylindrische Dichtfläche 4 ausbildet. An diese zylindrische Dichtfläche 4 schließt sich zum Ende der Kupplungshülse 1 hin eine sich konisch aufweitende Dichtfläche 5 an.

Auf der Außenseite trägt die Kupplungshülse 1 ein koaxial zur Längsachse derselben verlaufendes Außengewinde 6, das im Abstand von der freien Kante 7 der Kupplungshülse 1 beginnt, zwischen diesem Außengewinde 6 und der freien Kante 7 ist eine zylindrische Führungsfläche 8 angeordnet, deren Außendurchmesser so gewählt ist, daß ein auf das Außengewinde 6 passendes Innengewinde über diese Führungsfläche 8 geführt geschoben werden kann.

Das Anschlußstück 2 umfaßt einen Anschlußzapfen 9, auf den ein Schlauch aufgeschoben werden kann, beispielsweise ein flexibler Hochdruckschlauch. Der Anschlußzapfen 9 wird dabei umgeben von einer Griffhülse 10, die axial unverschieblich und unverdrehbar auf dem Anschlußstück 2 gehalten ist, beispielsweise durch den Eingriff ihrer Stirnwand 11 in entsprechende Rücksprünge 12 auf dem Anschlußstück 2.

Die Stirnwand 11 bildet zusammen mit einer zylindrischen Ringschulter 13 eine Umfangsnut 14 auf dem Anschlußstück 2 aus, in die die Stirnwand 15 eines topfförmigen Überwurfrings 16 eingreift, der dadurch frei drehbar und in axialer Richtung allenfalls geringfügig verschiebbar und sonst festgelegt auf dem Anschlußstück 2 gelagert ist. Dieser Überwurfring 16 trägt ein Innengewinde 17, das sich vom freien Ende des Überwurfrings 16 über einen wesentlichen Teil seiner axialen Erstreckung ausdehnt und das auf das Außengewinde 6 der Kupplungshülse 1 paßt.

Die zylindrische Ringschulter 13 geht über einen im Querschnitt bogenförmigen Abschnitt 18 in einen kreiszylindrischen Nippel 19 über, dessen Außendurchmesser kleiner ist als der der zylindrischen Ringschulter 13. Der bogenförmige Abschnitt 18 bildet dabei eine konvexe Dichtfläche aus, der Nippel 19 eine zylindrische. Im Nippel 19 ist eine in Umfangsrichtung umlaufende Ringnut 21 angeordnet, in die eine Ringdichtung 20 eingelegt ist, beispielsweise in Form eines O-Rings. Diese Ringdichtung 20 bildet gemeinsam mit dem Nippel 19 eine zylindrische Dichtungsfläche aus. Die Abmessungen des Nippels 19 sind derart gewählt, daß die Gesamtlänge des Nippels zwischen dem bogenförmigen Abschnitt 18 und dem freien Ende zwischen 0.3 und 0.4 des Nippelaußendurchmesser liegt, wobei der zylindrische Abschnitt zwischen dem bogenförmigen Abschnitt 18 und der Ringnut 21 eine Längserstreckung zwischen 0.1 und 0.2 des Außendurchmessers des Nippels beträgt. Der zylindrische Abschnitt zwischen der Ringnut und dem freien Ende des Nippels hat eine Längserstreckung in der Größenordnung von 0.05 bis 0.1 des Nippelaußendurchmessers.

Insgesamt wird der Nippel 19 vollständig im Inneren des Überwurfrings 16 aufgenommen, der Abstand zwischen dem freien Ende des Nippels 19 und der freien Kante des Überwurfrings beträgt mindestens 2,5 mm.

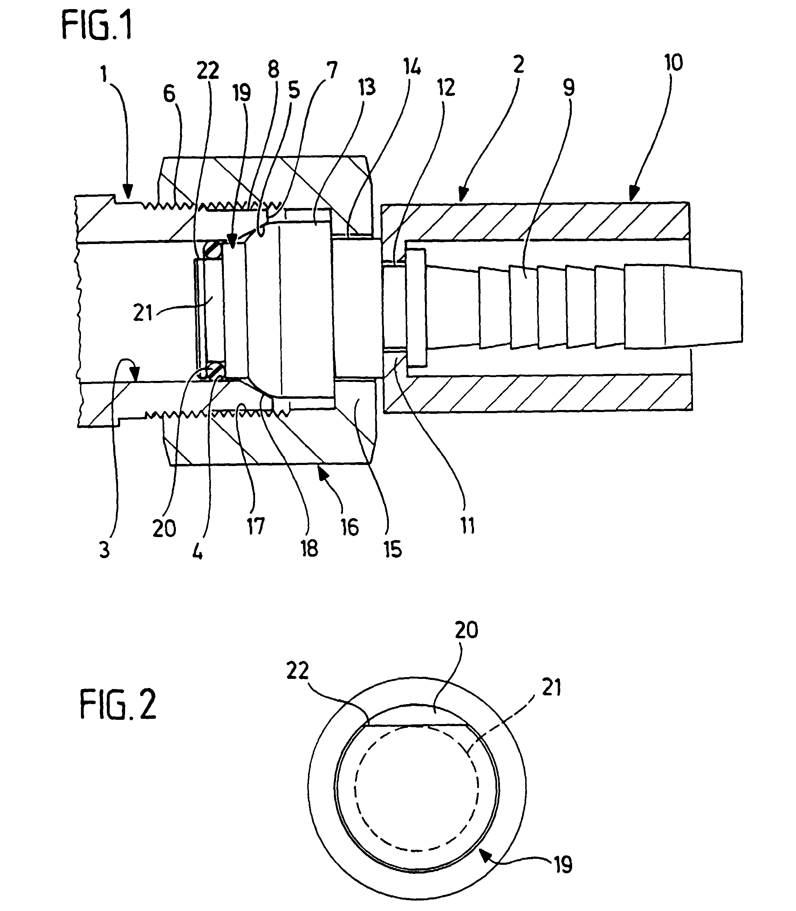

In dem zylindrischen Bereich zwischen der Ringnut 21 und dem freien Ende des Nippels 19 ist eine sektorenförmige Durchbrechung 22 vorgesehen, die durch eine den Boden der Ringnut 21 tangierende Sehne begrenzt wird (Figur 2). Durch diese Durchbrechung 22 wird ein stirnseitiger Zugang zur Ringnut 21 freigegeben, durch den das Auswechseln der Ringdichtung 20 ermöglicht wird.

Beim Herstellen einer Kupplung durch axiales Zusammenführen der Kupplungshülse 1 und des Anschlußstücks 2 gelangt zunächst der freie Rand des Überwurfrings 16 auf die Führungsfläche 8 und gleitet auf dieser so weit, bis das Innengewinde 17 am Außengewinde 6 anliegt. In diesem Teil der Bewegung wird der Nippel 19 im Abstand in den konischen Teil der Kupplungshülse 1 eingeführt, ohne diese zu berühren, so daß keinerlei Gefahr einer Beschädigung der Dichtflächen besteht. Eine weitere axiale Annäherung erfolgt dann durch Aufschrauben des Überwurfrings auf die Kupplungshülse 1. Dabei tritt der Nippel 19 in die Innenbohrung 3 ein, bis der bogenförmige Abschnitt 18 linienförmig an der konischen Dichtfläche 5 der Kupplungshülse 1 anliegt, so daß damit eine doppelte Dichtung gebildet wird, nämlich einmal durch die Ringdichtung 20 und die zylindrische Dichtfläche 4 und zum anderen durch den bogenförmigen Abschnitt 18 und die konische Dichtfläche 5. In keiner Phase des Zusammenführens besteht irgendeine Beschädigungsgefahr für diese Dichtflächen, da diese nur in genau axialer Richtung relativ zueinander bewegt werden. Die Überlappung der zylindrischen Flächen des Nippels 19 und der zylindrischen Dichtfläche 4 ist gering, so daß auch wenig Fläche für Ablagerungen bleibt, die die beiden Teile zusammenbacken könnte. Ein Lösen dieser Verbindung ist daher ohne weiteres möglich.

Auch bei gelöster Verbindung ist der Nippel 19 allseits vom Überwurfring 16 geschützt, so daß auch in dieser Phase keinerlei Beschädigungsgefahr für den Nippel 19 und die empfindlichen Dichtflächen besteht.

## Patentansprüche

1. Mit einem Überwurfring (16) versehenes Anschlußstück (2) für die Rohrleitungskupplung eines Hochdruckreinigungsgeräts, welche Rohrleitungskupplung eine Kupplungshülse (1) mit einer konischen Dichtfläche (5), einer daran anschließenden kreiszylindrischen Dichtfläche (4) sowie ein Außengewinde (6) für den Überwurfring (16) des Anschlußstückes (2) umfaßt, mit einem eine Ringdichtung (20) tragenden, zylindrischen, abdichtbar an die kreiszylindrische Dichtfläche (4) der Kupplungshülse (1) anlegbaren Nippel (19) und einer konvexen Dichtschulter (18) zur dichtenden Anlage an der konischen Dichtfläche (5) der Kupplungshülse (1), wobei der Überwurfring (16) auf dem Anschlußstück (2) frei drehbar und in axialer Richtung im wesentlichen unverschiebbar gelagert ist, dadurch gekennzeichnet, daß der Überwurfring (16) in axialer Richtung über das freie Ende des Nippels (19) übersteht und daß das Verhältnis der Länge des Nippels (19) zu dessen Außendurchmesser zwischen 0.4 und 0.3 liegt.

2. Anschlußstück nach Anspruch 1, dadurch gekennzeichnet, daß die axiale Erstreckung der zylindrischen Fläche des Nippels (19) zwischen der konvexen Dichtschulter (18) und einer die Ringdichtung (20) aufnehmenden Ringnut (21) zwischen 0.2 und 0.1 des Außendurchmessers des Nippels (19) beträgt.

3. Anschlußstück nach Anspruch 1 oder 2, dadurch gekennzeichnet, daß die axiale Erstreckung der zylindrischen Fläche des Nippels (19) zwischen einer die Ringdichtung (20) aufnehmenden Ringnut (21) und dem freien Ende des Nippels (19) zwischen 0.1 und 0.05 des Außendurchmessers des Nippels (19) beträgt.

4. Anschlußstück nach einem der voranstehenden Ansprüche, dadurch gekennzeichnet, daß der Überwurfring (16) mindestens um 2,5 mm über das freie Ende des Nippels (19) vorsteht.

5. Anschlußstück nach einem der voranstehenden Ansprüche, dadurch gekennzeichnet, daß der Überwurfring (16) ein an seinem freien Rand beginnendes Innengewinde (17) trägt und daß das Außengewinde (6) der Kupplungshülse (1) an eine zylindrische Führungsfläche (8) am freien Ende der Kupplungshülse (1) anschließt.

6. Anschlußstück nach einem der voranstehenden Ansprüche, dadurch gekennzeichnet, daß die konvexe Dichtschulter (18) in einen zylindrischen Anschlag (13) übergeht, an dem der Überwurfring (16) anliegt, und daß das Verhältnis der axialen Erstreckung dieses zylindrischen Anschlags (13) zu seinem Außendurchmesser zwischen 2 und 0.5 liegt.

7. Anschlußstück nach einem der voranstehenden Ansprüche, dadurch gekennzeichnet, daß der Nippel (19) in seinem zwischen einer die Ringdichtung (20) aufnehmenden Ringnut (21) und seinem freien Ende liegenden Abschnitt über einen Umfangsbereich eine die Ringnut (21) bis zu ihrem Boden freigebende Durchbrechung (22) aufweist.

8. Anschlußstück nach Anspruch 7, dadurch gekennzeichnet, daß die Durchbrechung (22) durch eine den Boden der Ringnut (21) tangierende Sehne des kreisförmigen Querschnitts des Nippels (19) begrenzt wird.

## Claims

1. A connecting piece (2), provided with a coupling ring (16), for the pipe coupling of a high-pressure cleaning device, the said pipe coupling comprising a coupling sleeve (1) with a conical sealing surface (5), an adjacent circular cylindrical sealing surface (4) and an external thread (6) for the coupling ring (16) of the connecting piece (2), comprising a cylindrical nipple (19) carrying a ring seal (20) and placeable against the circular cylindrical sealing surface (4) of the coupling sleeve (1) so as to provide a seal, and comprising a convex sealing shoulder (18) for sealed contact with the conical sealing surface (5) of the coupling sleeve (1), wherein the coupling ring (16) is freely rotatable on the connecting piece (2) and is substantially non-displaceably mounted in the axial direction, characterised in that the coupling ring (16) projects axially beyond the free end of the nipple (19), and in that the ratio of the length of the nipple (19) to its outer diameter lies between 0.4 and 0.3.

2. A connecting piece according to claim 1, characterised in that the axial extent of the cylindrical surface of the nipple (19), between the convex sealing shoulder (18) and an annular groove (21) receiving the ring seal (20), is between 0.2 and 0.1 of the outer diameter of the nipple (19).

3. A connecting piece according to claim 1 or 2, characterised in that the axial extent of the cylindical surface of the nipple (19), between an annular groove (21) receiving the ring seal (20) and the free end of the nipple (19), is between 0.1 and 0.05 of the outer diameter of the nipple (19).

4. A connecting piece according to any one of the preceding claims, characterised in that the coupling ring (16) projects at least 2.5 mm beyond the free end of the nipple (19).

5. A connecting piece according to any one of the preceding claims, characterised in that the coupling ring (16) carries an internal thread (17) beginning at its free end, and in that the external thread (6) of the coupling sleeve (1) is adjacent to a cylindrical guide surface (8) at the free end of the coupling sleeve (1).

6. A connecting piece according to any one of the preceding claims, characterised in that the convex sealing shoulder (18) merges into a cylindrical stop (13), against which the coupling ring (16) rests, and in that the ratio of the axial extent of this cylindrical stop (13) to its outer diameter lies between 2 and 0.5

7. A connecting piece according to any one of the preceding claims, characterised in that the portion of the nipple (19) lying between an annular groove (21) receiving the ring seal (20) and its free end has an opening (22) exposing the annular groove (21) down to its base over a circumferential region.

8. A connecting piece according to claim 7, characterised in that the opening (22) is bounded by a chord of the circular cross-section of the nipple (19) tangent to the base of the annular groove (21).

## Revendications

1. Raccord (2) muni d'une bague-chapeau (16) pour l'organe de raccordement d'un tuyau d'un appareil de nettoyage sous haute pression, organe de raccordement qui comporte une tubulure de raccordement (1) présentant une surface d'étanchéité conique (5), une surface d'étanchéité cylindrique circulaire (4) qui s'y raccorde ainsi qu'un filetage extérieur (6) pour la bague-chapeau (16) du raccord (2), comportant un mamelon cylindrique (19) qui porte une garniture d'étanchéité annulaire (20) et peut s'appliquer, avec étanchéité, contre la surface d'étanchéité cylindrique circulaire (4) de la tubulure de raccordement (1) ainsi qu'un épaulement d'étanchéité convexe (18) pour s'appliquer de façon étanche contre la surface d'étanchéité conique (5) de la tubulure de raccordement (1), la bague-chapeau (16) étant portée avec liberté de tourner sur le raccord (2) et sensiblement sans liberté de coulisser selon la direction axiale, caractérisé par le fait que la bague-chapeau (16) déborde, selon la direction axiale, au-delà de l'extrémité libre du mamelon (19) et que le rapport entre la longueur du mamelon (19) et son diamètre extérieur vaut entre 0,4 et 0,3.

2. Raccord selon la revendication 1, caractérisé par le fait que l'extension axiale de la surface cylindrique du mamelon (19) entre l'épaulement d'étanchéité convexe (18) et une rainure annulaire (21) qui reçoit la garniture d'étanchéité annulaire (20) vaut entre 0,2 et 0,1 du diamètre extérieur du mamelon (19).

3. Raccord selon la revendication 1 ou 2, caractérisé par le fait que l'extension axiale de la surface cylindrique du mamelon (19) entre une rainure annulaire (21) qui reçoit la garniture d'étanchéité annulaire (20) et l'extrémité libre du mamelon (19) vaut entre 0,1 et 0,05 du diamètre extérieur du mamelon (19).

4. Raccord selon l'une des revendications précédentes, caractérisé par le fait que la bague-chapeau (16) déborde d'au moins 2,5 mm au-delà de l'extrémité libre du mamelon (19).

5. Raccord selon l'une des revendications précédentes, caractérisé par le fait que la bague-chapeau (16) porte un filetage intérieur (17) commençant à son bord libre et que le filetage extérieur (6) e la tubulure de raccordement (1) se raccorde à une surface de guidage cylindrique (8) prévue à l'extrémité libre de la tubulure de raccordement (1).

6. Raccord selon l'une des revendications précédentes, caractérisé par le fait que l'épaulement d'étanchéité convexe (18) se transforme en une butée cylindrique (13) contre laquelle s'applique la bague-chapeau (16) et que le rapport entre l'extension axiale de cette butée cylindrique (13) et son diamètre extérieur vaut entre 2 et 0,5.

7. Raccord selon l'une des revendications précédentes, caractérisé par le fait que le mamelon (19) présente, sur une zone périphérique, sur son tronçon situé entre une rainure annulaire (21) qui reçoit la garniture d'étanchéité annulaire (20) et son extrémité libre, une découpure (22) qui permet d'accéder à la rainure annulaire (21) jusqu'à son fond.

8. Raccord selon la revendication 7, caractérisé par le fait que la découpure (22) est limitée par une corde, tangente au fond de la rainure annulaire (21), de la section circulaire du mamelon (19).
